# EUROPEAN PATENT SPECIFICATION

(11) **EP 2 000 264 B1**
(45) Date of publication and mention of the grant of the patent: **30.07.2014**
(21) Application number: 08017019.4
(22) Date of filing: 25.08.2005
(51) Int. Cl.: B25D 17/24, B25D 16/00

(54) **Power tool with dynamic vibration reducer**
Werkzeugmaschine mit dynamischem Schwingungsdämpfer
Machine-outil avec réducteur dynamique de vibrations

(30) Priority: 27.08.2004 JP 2004249011
(43) Date of publication of application: 10.12.2008
(62) Divisional of application: 05774695.0
(73) Proprietor: Makita Corporation, Anjo-shi, Aichi-ken 446-8502 (JP)
(72) Inventor: Aoki, Yonosuke, Anjo-shi Aichi-ken 446-8502 (JP)
(74) Representative: Schmidtchen, Jürgen Christian

(56) References cited:
- EP-A- 0 066 779
- EP-A2- 1 464 449
- DE-C- 815 179
- FR-A- 2 237 734
- JP-A- 52 109 673
- JP-A- 57 066 879
- JP-A- 2003 011 073
- JP-A- 2004 216 524
- US-A- 2 875 731

## Description

### FIELD OF THE INVENTION

The present invention relates to a power tool according to the preamble of claim 1. Such a power tool is known from document JP-2004-216524 A.

### BACKGROUND OF THE INVENTION

Japanese non-examined laid-open Patent Publication No. 52-109673 discloses an electric hammer having a vibration reducing device. In the known electric hammer, a vibration proof chamber is integally formed with a body housing (and a motor housing) in a region on the lower side of the body housing and forward of the motor housing. A dynamic vibration reducer is disposed within the vibration proof chamber.

In the above-mentioned known electric hammer, the vibration proof chamber that houses the dynamic vibration reducer is provided in the housing in order to provide an additional function of reducing vibration in working operation. As a result, however, the electric hammer increases in size.

US 2002/0185288 A1 and FR 2 237 734 A disclose power tools having vibrations reducers.

### SUMMARY OF THE INVENTION

### (Object of the Invention)

It is, accordingly, an object of the present invention to provide an effective technique for reducing vibration in working operation, while avoiding size increase of a power tool.

### (Subject-matter of the Invention)

The above-described object is achieved by a power tool according to claim 1.

The "power tool" may particularly includes power tools, such as a hammer, a hammer drill, a jigsaw and a reciprocating saw, in which a tool bit performs a working operation on a workpiece by reciprocating. When the power tool is a hammer or a hammer drill, the "internal mechanism" according to this invention comprises a motion converting mechanism that converts the rotating output of the motor to linear motion and drives the tool bit in its longitudinal direction, and a power transmitting mechanism that appropriately reduces the speed of the rotating output of the motor and transmits the rotating output as rotation to the tool bit.

In the present invention, the dynamic vibration reducer is disposed in the power tool by utilizing a space within the housing. Therefore, the dynamic vibration reducer can perform a vibrations reducing action in working operation, while avoiding size increase of the power tool. Further, the dynamic vibration reducer can be protected from an outside impact, for example, in the event of drop of the power tool.

The present invention will be more apparent from the following detailed description and the drawings.

### BRIEF DESCRIPTION OF THE DRAWINGS

FIG. 1 is a side view showing a hammer drill according to an embodiment of the invention, with an outer housing and an inner housing shown in section.
FIG. 2 is a side view of the hammer drill, with the outer housing shown in section.
FIG. 3 is a plan view of the hammer drill, with the outer housing shown in section.

### DETAILED DESCRIPTION OF THE INVENTION

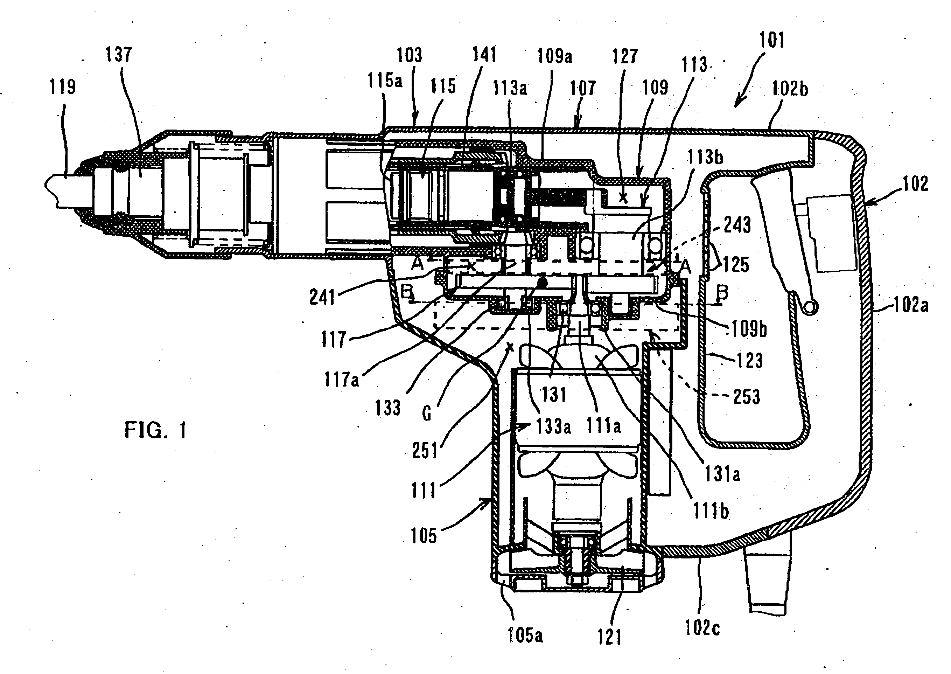

A representative embodiment of the present invention will now be described with reference to FIGS. 1 to 3. In the embodiment, an electric hammer drill will be explained as a representative example of a power tool according to the present invention. The embodiment features a dynamic vibration reducer disposed in a space within a housing. Before a detailed explanation of placement of the dynamic vibration reducer, the configuration of the hammer drill will be briefly described with reference to FIG. 1. The hammer drill 101 mainly includes a body 103, a hammer bit 119 detachably coupled to the tip end region (on the left side as viewed in FIG. 1) of the body 103 via a tool holder 137, and a handgrip 102 connected to a region of the body 103 on the opposite side of the hammer bit 119. The body 103, the hammer bit 119 and the handgrip 102 are features that correspond to the "housing", the "tool bit" and the "handgrip", respectively, according to the present invention.

The body 103 of the hammer drill 101 mainly includes a motor housing 105, a crank housing 107, and an inner housing 109 that is housed within the motor housing 105 and the crank housing 107. The motor housing 105 and the crank housing 107 are features that correspond to the "outer housing" according to this invention, and the inner housing 109 corresponds to the "inner housing". The motor housing 105 is located on the lower part of the handgrip 102 toward the front and houses a driving motor 111. The driving motor 111 is a feature that corresponds to the "motor" according to this invention.

In the present embodiment, for the sake of convenience of explanation, in the state of use in which the user holds the handgrip 102, the side of the hammer bit 119 is taken as the front side and the side of the handgrip 102 as the rear side. Further, the side of the driving motor 111 is taken as the lower side and the opposite side as the upper side; the vertical direction and the horizontal direction which are perpendicular to the longitudinal direction are taken as the vertical direction and the lateral direction, respectively.

The crank housing 107 is located on the upper part of the handgrip 102 toward the front and butt-joined to the motor housing 105 from above. The crank housing 107 houses the inner housing 109 together with the motor housing 105. The inner housing 109 houses a cylinder 141, a motion converting mechanism 113, and a gear-type power transmitting mechanism 114. The cylinder 141 houses a striking element 115 that is driven to apply a striking force to the hammer bit 119 in its longitudinal direction. The motion converting mechanism 113 comprises a crank mechanism and converts the rotating output of the driving motor 111 to linear motion and then drives the striking element 115 via an air spring. The power transmitting mechanism 117 transmits the rotating output of the driving motor 111 as rotation to the hammer bit 119 via a tool holder 137. Further, the inner housing 109 includes an upper housing 109a and a lower housing 109b. The upper housing 109a houses the entire cylinder 141 and most of the motion converting mechanism 113 and power transmitting mechanism 117, while the lower housing 109b houses the rest of the motion converting mechanism 113 and power transmitting mechanism 117. The motion converting mechanism 113, the striking element 115 and the power transmitting mechanism 117 are features that correspond to the "internal mechanism, according to this invention.

The motion converting mechanism 113 appropriately converts the rotating output of the driving motor 111 to linear motion and then transmits it to the striking element 115. As a result, an impact force is generated in the longitudinal direction of the hammer bit 119 via the striking element 115. The striking element 115 includes a striker 115a and an intermediate element in the form of an impact bolt (not shown). The striker 115a is driven by the sliding movement of a piston 113a of the motion converting mechanism 113 via the action of air spring within the cylinder 141. Further, the power transmitting mechanism 117 appropriately reduces the speed of the rotating output of the driving motor 111 and transmits the rotating output as rotation to the hammer bit 119. Thus, the hammer bit 119 is caused to rotate in its circumferential direction. The hammer drill 101 can be switched by appropriate operation of the user between a hammer mode in which a working operation is performed on a workpiece by applying only a striking force to the hammer bit 119 in the longitudinal direction, and a hammer drill mode in which a working operation is performed on a workpiece by applying an longitudinal striking force and a circumferential rotating force to the hammer bit 119.

The hammering operation in which a striking force is applied to the hammer bit 119 in the longitudinal direction by the motion converting mechanism 113 and the striking element 115, and the hammer-drill operation in which a rotating force is applied to the hammer bit 119 in the circumferential direction by the power transmitting mechanism 117 in addition to the striking force in the longitudinal direction are known in the art. Also, the mode change between the hammer mode and the hammer drill mode is known in the art. These known techniques are not directly related to this invention and therefore will not be described in further detail.

The hammer bit 119 moves in the longitudinal direction on the axis of the cylinder 141. Further, the driving motor 111 is disposed such that the axis of an output shaft 111a is perpendicular to the axis of the cylinder 141. The inner housing 109 is disposed above the driving motor 111.

The handgrip 102 includes a grip 102a to be held by the user and an upper and a lower connecting portions 102b, 102c that connect the grip 102a to the rear end of the body 103. The grip 102a vertically extends and is opposed to the rear end of the body 103 with a predetermined spacing. In this state, the grip 102a is detachably connected to the rear end of the body 103 via the upper and lower connecting portions 102b, 102c.

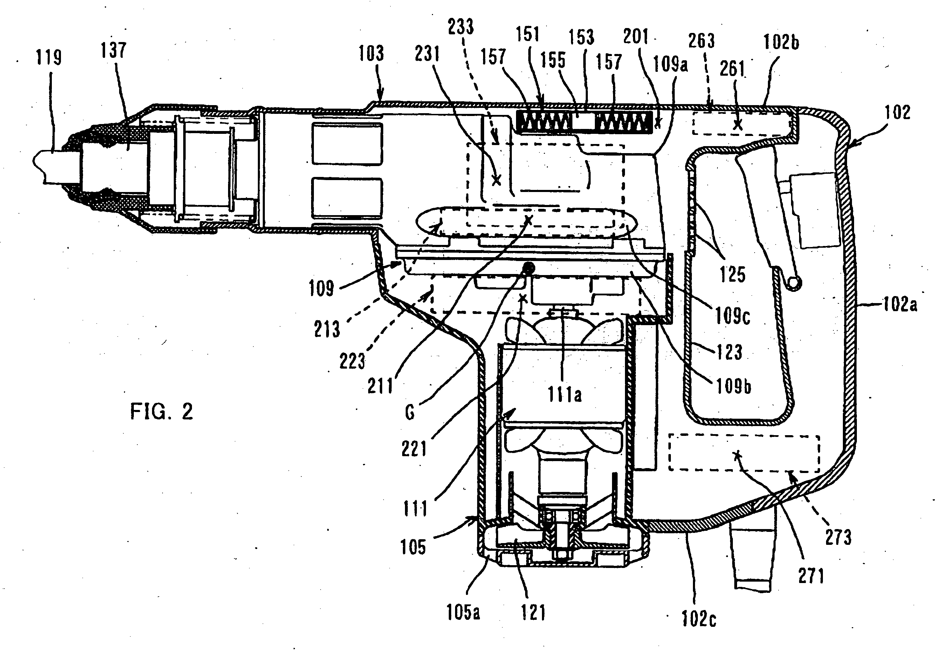

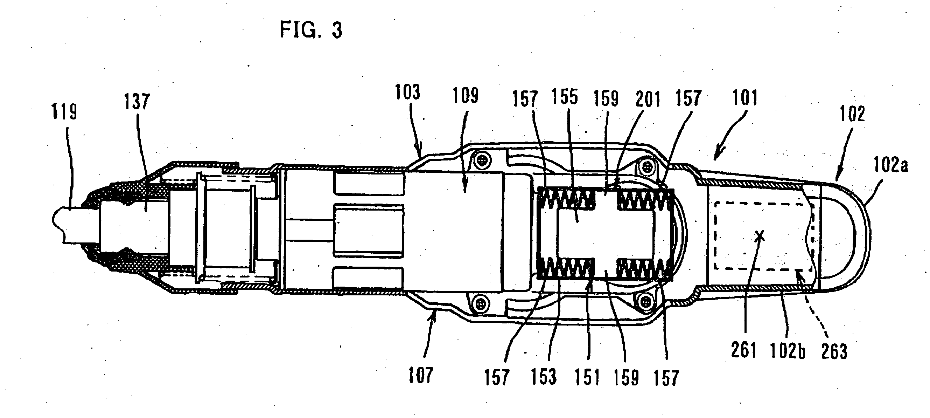

A dynamic vibration reducer 151 is provided in the hammer drill 101 in order to reduce vibration which is caused in the hammer drill 101, particularly in the longitudinal direction of the hammer bit 119, during hammering or hammer-drill operation. The dynamic vibration reducer 151 is shown as an example in FIGS. 2 and 3 in sectional view. The dynamic vibration reducer 151 mainly includes a box-like (or cylindrical) vibration reducer body 153, a weight 155 and biasing springs 157 disposed on the front and rear sides of the weight 155. The weight 155 is disposed within the vibration reducer body 153 and can move in the longitudinal direction of the vibration reducer body 153. The biasing spring 157 is a feature that corresponds to the "elastic element" according to the present invention. The biasing spring 157 applies a spring force to the weight 155 when the weight 155 moves in the longitudinal direction of the vibration reducer body 153.

Placement of the dynamic vibration reducer 151 will now be explained with respect to the embodiment.

In the embodiment, as shown in FIGS. 2 and 3, the dynamic vibration reducer 151 is disposed by utilizing a space in the upper region inside the body 103, or more specifically, a space 201 existing between the inner wall surface of the upper region of the crank housing 107 and the outer wall surface of the upper region of an upper housing 109a of the inner housing 109. The dynamic vibration reducer 151 is disposed in the space 201 such that the direction of movement of the weight 155 or the vibration reducing direction coincides with the longitudinal direction of the hammer bit 119. The space 201 is dimensioned to be larger in the horizontal directions (the longitudinal and lateral directions) than in the vertical direction (the direction of the height). Therefore, in this embodiment, the dynamic vibration reducer 151 has a shape conforming to the space 201. Specifically, as shown in sectional view, the vibration reducer body 153 has a box-like shape short in the vertical direction and long in the longitudinal direction. Further, projections 159 are formed on the right and left sides of the weight 155 in the middle in the longitudinal direction. The biasing springs 157 are disposed between the projections 159 and the front end and the rear end of the vibration reducer body 153. Thus, the amount of travel of the weight 155 can be maximized while the longitudinal length of the vibration reducer body 153 can be minimized. Further, the movement of the weight 155 can be stabilized.

Thus, in the embodiment, the dynamic vibration reducer 151 is disposed by utilizing the space 201 existing within the body 103. As a result, vibration caused in working operation of the hammer drill 101 can be reduced by the vibration reducing action of the dynamic vibration reducer 151, while size increase of the body 103 can be avoided. Further, by placement of the dynamic vibration reducer 151 within the body 103, the dynamic vibration reducer 151 can be protected from an outside impact in the event of drop of the hammer drill 101.

As shown in FIG. 2, generally, a center of gravity G of the hammer drill 101 is located below the axis of the cylinder 141 and slightly forward of the axis of the driving motor 111. Therefore, when, like this embodiment, the dynamic vibration reducer 151 is disposed within the space 201 existing between the inner wall surface of the upper region of the crank housing 107 and the outer wall surface of the upper region of the upper housing 109a of the inner housing 109, the dynamic vibration reducer 151 is disposed on the side of the axis of the cylinder 141 which is opposite to the center of gravity G of the hammer drill 101. Thus, the center of gravity G of the hammer drill 101 is located closer to the axis of the cylinder 141, which is effective in lessening or preventing vibration in the vertical direction. Further, the dynamic vibration reducer 151 disposed in the space 201 is located relatively near to the axis of the cylinder 141, so that it can perform an effective vibration reducing action against vibration in working operation using the hammer drill 101.

In the above-described embodiments, an electric hammer drill has been described as a representative example of the power tool. However, other than the hammer drill, this invention can not only be applied, for example, to an electric hammer in which the hammer bit 119 performs only a hammering movement, but to any power tool, such as a reciprocating saw and a jigsaw, in which a working operation is performed on a workpiece by reciprocating movement of the tool bit.

In the following, several aspects, which are not part of the invention, are indicated:
1. A power tool comprising:
   a motor,
   an internal mechanism driven by the motor,
   a housing that houses the motor and the internal mechanism,
   a tool bit disposed in one end of the housing and driven by the internal mechanism in the longitudinal direction of the tool bit to perform a predetermined operation,
   a handgrip connected to the other end of the housing, and
   a dynamic vibration reducer including a weight and an elastic element, the elastic element being disposed between the weight and the housing and adapted to apply a biasing force to the weight, wherein the weight reciprocates in the longitudinal direction of the tool bit against the biasing force of the elastic element, whereby the dynamic vibration reducer reduces vibration which is caused in the housing in the longitudinal direction of the tool bit in the working operation, and wherein the dynamic vibration reducer is disposed by utilizing an internal space defined by the housing and/or the handgrip.
2. The power tool as defined in aspect 1, wherein the dynamic vibration reducer is disposed by utilizing a space between the housing and the internal mechanism.
3. The power tool as defined in aspect 1 or 2, wherein the housing includes an inner housing that houses the internal mechanism and an outer housing that houses the inner housing and the motor such that the axial direction of the motor crosses the longitudinal direction of the tool bit, and wherein the dynamic vibration reducer is disposed by utilizing a space existing between an axial end of the motor and the inner housing.
4. The power tool as defined in aspect 3, wherein the inner housing includes a receiver to receive a bearing that rotatably supports an output shaft of the driving motor and a receiver to receive a bearing that rotatably supports a rotating element of the internal mechanism, the inner housing being configured such that the bearing receivers guide the linear movement of the weight of the dynamic vibration reducer.
5. The power tool as defined in aspect 1 or 2, wherein the housing includes an inner housing that houses the internal mechanism and an outer housing that houses the inner housing and the motor such that the axial direction of the motor crosses the longitudinal direction of the tool bit, and wherein the dynamic vibration reducer is disposed by utilizing a space existing between an outer wall surface of a side region of the inner housing and an inner wall surface of a side region of the outer housing and a recess formed in the outer wall surface of the inner housing and extending in the longitudinal direction of the tool bit.
6. The power tool as defined in aspect 1 or 2, wherein the housing includes an inner housing that houses the interval mechanism and an outer housing that houses the inner housing and the motor such that the axial direction of the motor crosses the longitudinal direction of the tool bit, and wherein the dynamic vibration reducer is disposed by utilizing a space existing between an outer wall surface of a side region of the inner housing and an inner wall surface of a side region of the outer housing and extending in the longitudinal direction of the tool bit.
7. The power tool as defined in aspect 1 or 2, wherein the housing includes an inner housing that houses the internal mechanism and an outer housing that houses the inner housing and the motor such that the axial direction of the motor crosses the longitudinal direction of the tool bit, and wherein the dynamic vibration reducer is disposed by utilizing a space existing between an outer wall surface of an upper surface region of the inner housing and an inner wall surface of an upper surface region of the outer housing and extending in the longitudinal direction of the tool bit.
8. The power tool as defined in aspect 1 or 2, wherein the housing includes an inner housing that houses the interval mechanism and an outer housing that houses the inner housing and the motor such that the axial direction of the motor crosses the longitudinal direction of the tool bit, and wherein the dynamic vibration reducer is disposed by utilizing a space existing between the inner housing and the internal mechanism, the dynamic vibration reducer being configured such that the linear movement of the weight of the dynamic vibration reducer is guided by component parts of the internal mechanism.
9. The power tool as defined in aspect 1, wherein the dynamic vibration reducer is disposed by utilizing a space within the handgrip such that the vibration reducing direction of the dynamic vibration reducer coincides with the longitudinal direction of the tool bit.
10. The power tool as defined in aspect 1 or 9, wherein the handgrip includes a grip to be held by a user and extending in a direction crossing the longitudinal direction of the tool bit and at least two connecting portions that connect the grip to the housing with a predetermined spacing therebetween in the longitudinal direction of the tool bit, and wherein the dynamic vibration reducer is disposed by utilizing either one or both of spaces existing in the connecting portions and extending in the longitudinal direction of the tool bit.

### Description of Numerals

- 101: hammer drill (power tool)
- 102: handgrip
- 102a: grip
- 102b, 102c: upper and lower connecting portions
- 103: body (housing)
- 105: motor housing (outer housing)
- 105a: outlet
- 107: crank housing
- 109: inner housing
- 109a: upper housing
- 109b: lower housing
- 109c: side recess (recess)
- 111: driving motor (motor)
- 111a: output shaft
- 111b: rotor
- 113: motion converting mechanism (internal mechanism)
- 113a: piston
- 113b: crank shaft
- 115: striking mechanism
- 115a: striker
- 117: power transmitting mechanism
- 117a: gear shaft
- 119: hammer bit (tool bit)
- 121: cooling fan
- 123: cover
- 125: inlet
- 127: crank chamber
- 131, 133: gear
- 131a, 133a:
- 137: tool holder
- 141: cylinder
- 151: front bearing
- 153: rear bearing
- 155: weight
- 157: biasing spring (elastic element)
- 159: projection
- 201, 211, 221, 231: space
- 213, 223, 233: dynamic vibration reducer
- 241: space
- 243: dynamic vibration reducer
- 245: vibration reducer body
- 247: weight
- 248: projection
- 249: biasing spring
- 251: space
- 253: dynamic vibration reducer
- 255: vibration reducer body
- 257: weight
- 258: projection
- 259: biasing spring
- 261, 271: space
- 263, 273: dynamic vibration reducer

## Claims

1. A power tool, comprising
a motor (111),
an internal mechanism (113, 115, 117) driven by the motor (111),
a housing (103) that comprises an outer housing (105, 107) and an inner housing (109), wherein the inner housing (109) houses the internal mechanism (113,115, 117), the outer housing (105, 107) houses the motor (111) and the inner housing (109) is housed within the outer housing (105, 107), the power tool being adapted to have a tool bit (119) mounted at one end of the housing (103) and driven by the internal mechanism in a longitudinal direction to perform a predetermined operation,
a handgrip (102) connected to the other end of the housing (103), and
a dynamic vibration reducer (151) that comprises a vibration reducer body (153) including a weight (155) and an elastic element (157), the elastic element being adapted to apply a biasing force to the weight and the weight being adapted to reciprocate in the longitudinal direction against the biasing force of the elastic element, whereby the dynamic vibration reducer reduces vibration which is caused in the housing in the longitudinal direction in the working operation, **characterised in that** the dynamic vibration reducer (151) is disposed by utilizing an internal space (201) defined by the housing (103), and
the internal space (201) is located in the upper region inside the outer housing (105, 107) existing between an inner wall surface of the upper region of the outer housing (105,107) and an outer wall surface of an upper region of the inner housing (109).

2. The power tool of claim 1, wherein
the internal space (201) is dimensioned to be larger in horizontal directions than in the vertical direction.

3. The power tool of claim 1 or 2, wherein
the inner housing (109) houses a cylinder (141) housing a striking element (115) for applying a striking force to a tool bit (119) mounted at the power tool,
the center of gravity (G) of the power tool is generally located below a longitudinal axis of the cylinder (141), and
the internal space (201) is located in the upper region inside the outer housing (105,107) existing between the inner wall surface of the upper region of the outer housing (105,107) and the outer wall surface of the upper region of the inner housing (109) such that the center of gravity (G) is located closer to the axis of the cylinder (141) than without the dynamic vibration reducer (151) disposed in the internal space (201).

4. The power tool of one of claims 1 to 3, wherein
the weight comprises, in a plan view of the power tool, projections (159) formed on the left and right sides of the weight (155) in the middle of the longitudinal direction,
the dynamic vibration reducer (151) conforms the shape of the internal space (201),
the elastic element (157) comprises a plurality of biasing springs (157), of which, in the plan view of the power tool, respective ones are disposed between the projections (159) on the left and right sides of the weight (155) and the front end and the rear end of the vibration reducer body (153).

5. The power tool of one of claims 1 to 3, wherein
the weight (155) comprises projections (159) formed on the right and left sides of the weight in the middle in the longitudinal direction,
the elastic element (157) comprises a set of biasing spring (157) disposed between the projections (159) and the front and rear ends of the vibration reducer body (153), and
the vibration reducer body (153) has a shape conforming to the internal space (201) dimensioned to be larger in the horizontal direction than in the vertical direction.

6. The power tool of one of claims 1 to 3, wherein
the weight (155) is disposed within the vibration reducer body (153),
the elastic element (157) comprises a set of biasing springs (157) disposed on the front and rear sides of the weight (155), and
the vibration reducer body (153) has a shape conforming to the internal space (201) dimensioned to be larger in the horizontal direction than in the vertical direction.

7. The power tool of one of claims 4 to 6, wherein
the vibration reducer body (153) has a box-like shape short in the vertical direction and long in the longitudinal direction.

## Patentansprüche

1. Kraftwerkzeug, mit
einem Motor (111),
einem internen Mechanismus (113, 115, 117), der durch den Motor (111) angetrieben wird,
einem Gehäuse (103), das ein äußeres Gehäuse (105, 107) und ein inneres Gehäuse (109) aufweist, bei dem das innere Gehäuse (109) den internen Mechanismus (113, 115, 117) aufnimmt, das äußere Gehäuse (105, 107) den Motor (111) aufnimmt und das innere Gehäuse (109) in dem äußeren Gehäuse (105, 107) aufgenommen ist, das Kraftwerkzeug dazu angepasst ist, dass ein Werkzeugbit (119) an einem Ende des Gehäuses (103) montiert und durch den internen Mechanismus in einer Längsrichtung zum Ausführen eines vorbestimmten Betriebs angetrieben wird,
einem Handgriff (102), der mit dem anderen Ende des Gehäuses (103) verbunden ist, und einem dynamischen Vibrationsreduzierer (151), der einen Vibrationsreduziererkörper (153) mit einem Gewicht (155) und einem elastischen Element (157) aufweist, bei dem das elastische Element dazu angepasst ist, eine Vorspannkraft an das Gewicht anzulegen, und das Gewicht dazu angepasst ist, sich in der Längsrichtung gegen die Vorspannkraft des elastischen Elements hin und her zu bewegen, wodurch der dynamische Vibrationsreduzierer Vibration verringert, die in dem Gehäuse in der Längsrichtung bei dem Arbeitsbetrieb verursacht wird,
**dadurch gekennzeichnet, dass**
der dynamische Vibrationsreduzierer (151) angeordnet ist unter Verwendung eines internen Raums (201), der durch das Gehäuse (103) definiert ist, und
der interne Raum (201) in dem oberen Bereich innerhalb des äußeren Gehäuses (105, 107) befindlich ist, der zwischen einer inneren Wandoberfläche des oberen Bereichs des äußeren Gehäuses (105, 107) und einer äußeren Wandoberfläche eines oberen Bereichs des inneren Gehäuses (109) existiert.

2. Kraftwerkzeug nach Anspruch 1, bei dem
der interne Raum (201) so dimensioniert ist, dass er in horizontalen Richtungen größer als in der vertikalen Richtung ist.

3. Kraftwerkzeug nach Anspruch 1 oder 2, bei dem
das innere Gehäuse (109) einen Zylinder (141) aufnimmt, der ein Schlagelement (115) zum Anlegen einer Schlagkraft an ein Werkzeugbit (119), das an dem Kraftwerkzeug montiert ist, aufnimmt,
der Schwerpunkt (G) des Kraftwerkzeugs allgemein unter einer Längsachse des Zylinders (141) befindlich ist, und
der interne Raum (201) in dem oberen Bereich innerhalb des äußeren Gehäuses (105, 107) befindlich ist, der zwischen der inneren Randoberfläche des oberen Bereichs des äußeren Gehäuses (105, 107) und der äußeren Wandoberfläche des oberen Bereichs des inneren Gehäuses (109) derart existiert, dass der Schwerpunkt (G) näher an der Achse des Zylinders (141) befindlich ist als ohne den dynamischen Vibrationsreduzierer (151), der in dem internen Raum (201) angeordnet ist.

4. Kraftwerkzeug nach einem der Ansprüche 1 bis 3, bei dem
das Gewicht, in einer Draufsicht auf das Kraftwerkzeug, Vorsprünge (159) aufweist, die auf der linken und rechten Seite des Gewichtes (155) in der Mitte der Längsrichtung ausgebildet sind,
der dynamische Vibrationsreduzierer (151) zu der Gestalt des internen Raums (201) passt, das elastische Element (157) eine Mehrzahl von Vorspannfedern (157) aufweist, von denen, in der Draufsicht auf das Kraftwerkzeug, entsprechende zwischen den Vorsprüngen (159) auf der linken und rechten Seite des Gewichtes (155) und dem vorderen Ende und dem hinteren Ende des Vibrationsreduziererkörpers (153) angeordnet sind.

5. Kraftwerkzeug nach einem der Ansprüche 1 bis 3, bei dem
das Gewicht (155) Vorsprünge (159) aufweist, die auf der linken und rechten Seite des Gewichtes in der Mitte in der Längsrichtung ausgebildet sind,
das elastische Element (157) einen Satz von Vorspannfedern (157) aufweist, die zwischen den Vorsprüngen (159) und den vorderen und hinteren Enden des Vibrationsreduziererkörpers (153) angeordnet sind, und
der Vibrationsreduziererkörper (153) eine Gestalt aufweist, die zu dem internen Raum (201) passt, der so dimensioniert ist, dass er in der horizontalen Richtung größer als in der vertikalen Richtung ist.

6. Kraftwerkzeug nach einem der Ansprüche 1 bis 3, bei dem
das Gewicht (155) innerhalb des Vibrationsreduziererkörpers (153) angeordnet ist, das elastische Element (157) einen Satz von Vorspannfedern (157) aufweist, die auf der Vorder- und Rückseite des Gewichtes (155) angeordnet sind, und
der Vibrationsreduziererkörper (153) eine Gestalt aufweist, die zu dem internen Raum (201) passt, der so dimensioniert ist, dass er in der horizontalen Richtung größer als in der vertikalen Richtung ist.

7. Kraftwerkzeug nach einem der Ansprüche 4 bis 6, bei dem
der Vibrationsreduziererkörper (153) eine kastenartige Gestalt aufweist, die in der vertikalen Richtung kurz und in der Längsrichtung lang ist.

## Revendications

1. Outil électrique, comprenant
un moteur (111),
un mécanisme interne (113, 115, 117) entraîné par le moteur (111),
un logement (103) qui comprend un logement externe (105, 107) et un logement interne (109), dans lequel le logement interne (109) loge le mécanisme interne (113, 115, 117), le logement externe (105, 107) loge le moteur (111) et le logement interne (109) est disposé dans le logement externe (105, 107), l'outil électrique étant adapté pour monter une mèche d'outil (119) dans une extrémité du logement (103) et pour l'entraîner par le mécanisme interne dans une direction longitudinale pour réaliser une opération prédéterminée,
une poignée (102) raccordée à l'autre extrémité du logement (103), et
un réducteur dynamique de vibrations (151) comprenant un corps de réduction vibrations (153) avec un poids (155) et un élément élastique (157), l'élément élastique étant adapté pour appliquer une force de sollicitation au poids, et le poids étant adapté pour aller et venir dans la direction longitudinale contre la force de sollicitation de l'élément élastique, moyennant quoi le réducteur dynamique de vibrations réduit les vibrations qui sont provoquées dans le logement dans la dircetion longitudinale lors de l'opération de travail,
charactérisé en ce que
le réducteur dynamique de vibrations (151) est disposé en utilisant un espace interne (201) défini par le logement (103), et
l'espace interne (201) étant disposé dans la zone supérieure à l'intérieur du logement externe (105, 107), située entre une surface de paroi interne de la zone supérieure du logement externe (105, 107) et une surface de paroi externe d'une zone supérieure du logement interne (109).

2. L'outil électrique tel que défini à la revendication 1, dans lequel l'espace interne (201) est dimensionné de sorte qu'il est plus grand en directions horizontales qu'en direction verticale.

3. L'outil électrique tel que défini à la revendication 1 ou 2, dans lequel
le logement interne (109) reçoit un vérin (141) logeant un élément de percussion (115) pour appliquer une force d'impact sur une mèche d'outil (119) montée sur l'outil électrique,
dans lequel le centre de gravité (G) de l'outil électrique est situé en général en-dessous d'une axe longitudinale du vérin (141), et
dans lequel l'espace interne (201) est disposé dans la zone supérieure à l'intérieur du logement externe (105, 107), située entre la surface de paroi interne de la zone supérieure du logement externe (105, 107) et la surface de paroi externe de la zone supérieure du logement interne (109) de sorte que le centre de gravité (G) est disposé plus proche de l'axe du vérin (141) qu'en absence du réducteur dynamique de vibrations (151) disposé dans l'espace interne (201).

4. L'outil électrique tel que défini dans l'une des revendications 1 à 3, dans lequel
le poids comprend saillies (159) formées, en vue des dessus, à gauche et a droite du poids (155) au centre de la direction longitudinale,
le réducteur dynamique de vibrations (151) conforme à la forme de l'espace interne (201),
l'élément élastique (157) comprend une pluralité des ressorts de précharge (157), dont des ressorts de précharge respectifs sont disposés entre les saillies (159) à gauche et à droite du poids (155) et l'extrémité avant et l'extrémité arrière du corps de réduction vibrations (153) en vue des dessus.

5. L'outil électrique tel que défini dans l'une des revendications 1 à 3, dans lequel
le poids (155) comprend saillies (159) formées à droite et à gauche du poids au centre dans la direction longitudinale,
l'élément élastique (157) comprend un ensemble de ressorts de précharge (157), qui sont disposés entre les saillies (159) et les extrémités avant et arrière du corps de réduction vibrations (153), et
le corps de réduction vibrations (153) a une forme qui conforme à l'espace interne (201) dimensionné plus grand dans la direction horizontale que dans la direction verticale.

6. L'outil électrique tel que défini dans l'une des revendications 1 à 3, dans lequel
le poids (155) est disposé à l'intérieur du corps de réduction vibrations (153),
l'élément élastique (157) comprend un ensemble de ressorts de précharge (157), qui sont disposés en avant et en arrière du poids (155), et
le corps de réduction vibrations (153) a une forme qui conforme à l'espace interne (201) dimensionné plus grand dans la direction horizontale que dans la direction verticale.

7. L'outil électrique tel que défini dans l'une des revendications 4 à 6, dans lequel
le corps de réduction vibrations (153) a une forme de type boîtier, qui est courte dans la direction verticale et longue dans la direction longitudinale.
